# FASCICULE DE BREVET EUROPEEN

(11) **EP 1 488 158 B1**
(45) Date de publication et mention de la délivrance du brevet: **23.07.2008**
(21) Numéro de dépôt: 03744883.4
(22) Date de dépôt: 21.03.2003
(51) Int. Cl.: F16L 37/20

(54) **DISPOSITIF DE MONTAGE AVEC SERRAGE AXIAL D UN ELEMENT ALLONG E**
VORRICHTUNG ZUR BEFESTIGUNG EINES LÄNGLICHEN ELEMENTS DURCH AXIALES FESTKLEMMEN
DEVICE FOR MOUNTING AN ELONGATED ELEMENT WITH AXIAL CLAMPING

(30) Priorité: 22.03.2002 FR 0203645
(43) Date de publication de la demande: 22.12.2004
(73) Titulaire: Bio-Rad Pasteur, 92430 Marnes-la-Coquette (FR)
(72) Inventeur: SEYDOUX, Daniel, F-67810 Holtzheim (FR); MULLER, Franck, F-67100 Strasbourg (FR)
(74) Mandataire: Nuss, Pierre
(86) Numéro de dépôt international: PCT/FR2003/000915
(87) Numéro de publication internationale: WO 2003/081114

(56) Documents cités:
- US-A- 5 482 628
- US-A- 6 090 190

## Description

La présente invention concerne les systèmes, et dispositifs destinés à supporter, de manière temporaire et sous contrainte, des éléments allongés, tels que par exemple les porte-cartouches pour cartouches de gel utilisées en association avec des appareils de chromatographie haute-pression, et a pour objet un dispositif pour le montage d'un élément allongé et un porte-cartouche correspondant.

Il existe de nombreuses applications dans lesquelles il y a lieu de procéder à des montages/démontages fréquents d'un élément interchangeable dans un système, tout en garantissant un positionnement précis et éventuellement sous contrainte dudit élément à l'état monté.

Les dispositifs actuels permettant de remplir ces fonctions sont toutefois d'une structure relativement complexe, encombrante et d'une manipulation fastidieuse.

Un cas particulier d'application du genre précité se présente dans le cadre des appareils de chromatographie haute pression et plus précisément en relation avec les porte-cartouches faisant partie de tels appareils.

Or, les porte cartouches actuels, tels que divulgués notamment par les documents US 6 090 190 et US-5 482 628, n'autorisent pas un montage/démontage rapide (parties constitutives assemblées par vissage), nécessitent de disposer d'un accès libre omnidirectionnel, et ne permettent pas de garantir, après chaque montage, une étanchéité optimale, ni le cas échéant une régulation thermique sans à-coups.

La présente invention a notamment pour but de proposer une solution permettant de pallier au moins certains des inconvénients précités.

A cet effet, l'invention a pour objet un dispositif pour le montage avec serrage axial et alignement précis d'un élément allongé, notamment d'un élément tubulaire amovible à intégrer de manière étanche dans un circuit de circulation traversant ledit dispositif, caractérisé en ce qu'il est principalement constitué, d'une part, par un corps rigide définissant une direction axiale et formant une embase sur laquelle sont formées ou fixées une pièce de butée comprenant un premier élément d'appui pour l'une des extrémités de l'élément allongé et une pièce de maintien au moins partiel pour ledit élément allongé, ces pièces étant axialement séparées, d'autre part, par un bloc support amovible comportant un passage traversant pour la réception ajustée, mais coulissante, d'une partie au moins de l'élément allongé et pouvant être positionné avec calage entre la pièce de maintien et la pièce de butée en venant en appui surfacique contre cette dernière au moins et, enfin, par une pièce mobile, guidée dans la direction et comprenant un second élément d'appui pour l'autre extrémité de l'élément allongé, ladite pièce mobile étant reliée à ou solidaire de moyens transformant le mouvement de pivotement d'un organe de manipulation en mouvement de translation dans ladite direction axiale de ladite pièce mobile.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
La figure 1 est une vue éclatée en perspective d'un dispositif selon l'invention formant porte-cartouche ;
La figure 2 est une vue en perspective du dispositif de la figure 1, l'élément allongé étant en place et le couvercle étant en position relevée (absence de serrage de l'élément allongé) ;
La figure 3 est une vue en coupe selon un plan vertical comprenant l'axe longitudinal de l'élément allongé du dispositif de la figure 2;
La figure 4 est une vue en coupe selon un plan horizontal passant par l'axe longitudinal de l'élément allongé du dispositif de la figure 2;
La figure 5 est une vue en coupe analogue à celle de la figure 4, le couvercle étant en position rabattue et l'élément allongé étant soumis à un serrage axial, et,
La figure 6 est une vue en perspective du dispositif représenté à la figure 1, le couvercle étant en position rabattue.

Comme le montrent les figures des dessins annexés, l'invention concerne un dispositif 1 pour le montage avec serrage axial et alignement précis d'un élément allongé 2, notamment d'un élément tubulaire amovible à intégrer de manière étanche dans un circuit de circulation traversant ledit dispositif 1.

Ce dispositif 1 est principalement constitué, d'une part, par un corps 3 allongé rigide définissant une direction axiale X et formant une embase sur laquelle sont formées ou fixées une pièce de butée 4 comprenant un premier élément d'appui 5 pour l'une 2' des'extrémités longitudinales de l'élément allongé 2 et une pièce 6 de maintien au moins partiel pour ledit élément allongé 2, ces pièces 4 et 6 étant axialement séparées ou décalées entre elles, d'autre part, par un bloc support 7 amovible comportant un passage traversant 8 pour la réception ajustée, mais coulissante ou avec faculté de coulissement, d'une partie au moins de l'élément allongé 2 et pouvant être positionné avec calage entre la pièce de maintien 6 et la pièce de butée 4 en venant en appui surfacique contre cette dernière au moins et, enfin, par une pièce mobile 9, guidée en translation dans la direction X et comprenant un second élément d'appui 10 pour l'autre extrémité 2" de l'élément allongé 2, ladite pièce mobile 9 étant solidaire de moyens 11, 11' ; 12, 12' transformant le mouvement de pivotement d'un organe de manipulation 13, 14 en mouvement de translation de ladite pièce mobile 9 dans ladite direction X.

Conformément à un mode de réalisation avantageux de l'invention représenté sur les dessins annexés, la pièce mobile 9 est solidaire, de manière articulée, de deux biellettes 11, 11' montées, à leurs extrémités opposées à ladite pièce mobile 9, avec faculté de rotation, sur des excentriques respectifs 12, 12' rapportés avec faculté de rotation sur le corps 3 formant embase et assemblés rigidement avec une pièce 13 formant levier pivotant pourvu d'un organe ou d'une zone 14 de préhension, les deux ensembles excentriques 12, 12' / biellettes 11, 11' transformant le mouvement de pivotement du levier 13 en mouvement de translation de la pièce mobile 9.

Le levier 13 pourra, par exemple, consister en une simple poignée déplaçable par pivotement entre une position relevée (pièce 9 dégagée) et une position rabattue contre les pièces 4, 6, 9 (pièce 9 engagée et serrée).

Toutefois, de manière préférée, l'organe de manipulation unique consistera en un capot ou couvercle 13 formant levier pivotant et muni d'un organe ou d'une zone extrémale de préhension 14 en vue du déplacement dudit levier, ledit couvercle ou capot 13 recouvrant substantiellement l'ensemble des pièces 4, 6, 9 et des éléments 5, 7, 10 dans sa position rabattue, correspondant à l'état serré de l'élément allongé 2, formant ainsi en coopération avec l'embase 3 au moins partiellement une enceinte de protection et d'isolation thermique basique entourant les composants précités.

La course de la pièce mobile 9 sera bien entendu définie de telle manière qu'à l'état rabattu du couvercle 13, l'élément allongé 2 soit serré avec au moins une force minimale prédéterminée entre les premier et second éléments d'appui 5 et 10, et qu'à l'état relevé dudit couvercle 13, ledit élément allongé 2 soit entièrement désengagé et puisse être aisément extrait du dispositif 1 avec le bloc support 7 dans lequel il est disposé.

Ainsi, le serrement et le desserrement de l'élément allongé 2 sont obtenus par de simples mouvements de pivotement limités du couvercle 13, la manipulation et le positionnement précis dudit élément allongé 2 sont aisés du fait de son association avec le bloc support 7 et l'effort requis pour le montage avec serrage est limité.

Chaque excentrique 12, 12' comporte une partie discoïdale 12" autour de laquelle est montée, libre en rotation, la biellette 11, 11' correspondante, et une partie 12''' de connexion au couvercle 13, une portion de tige cylindrique assurant sa liaison à rotation avec le corps 3.

Une possible liaison articulée des biellettes 11, 11' au niveau de la pièce mobile 9 est représentée à titre d'exemple de réalisation sur les figures des dessins annexés.

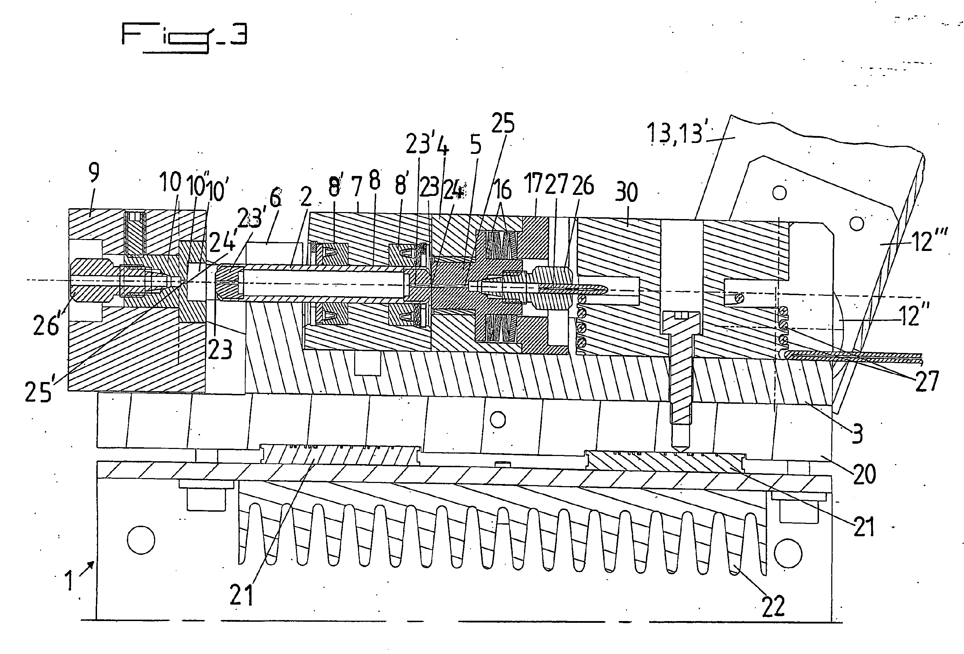

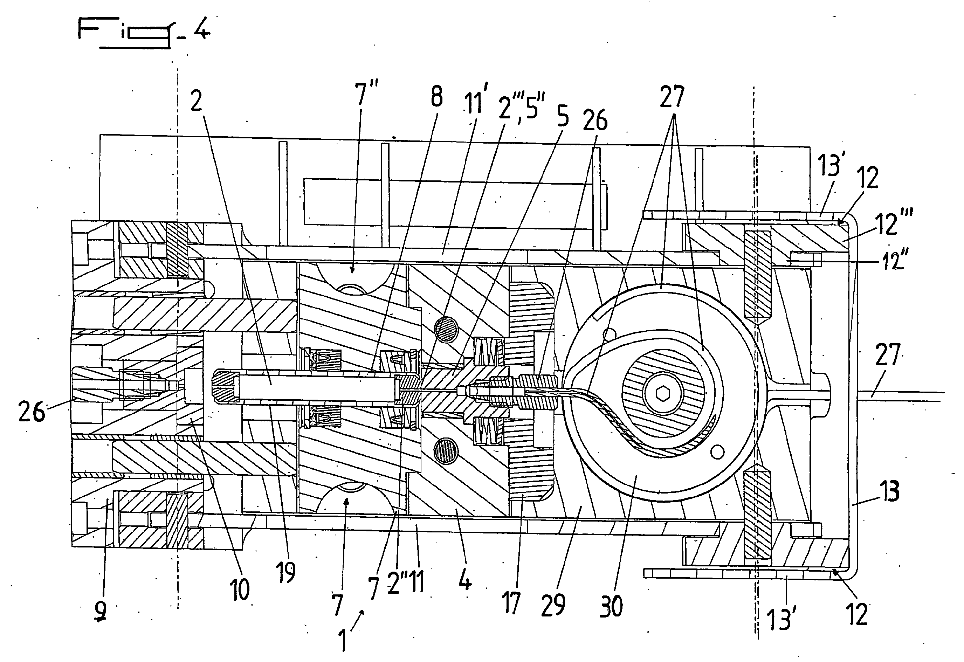

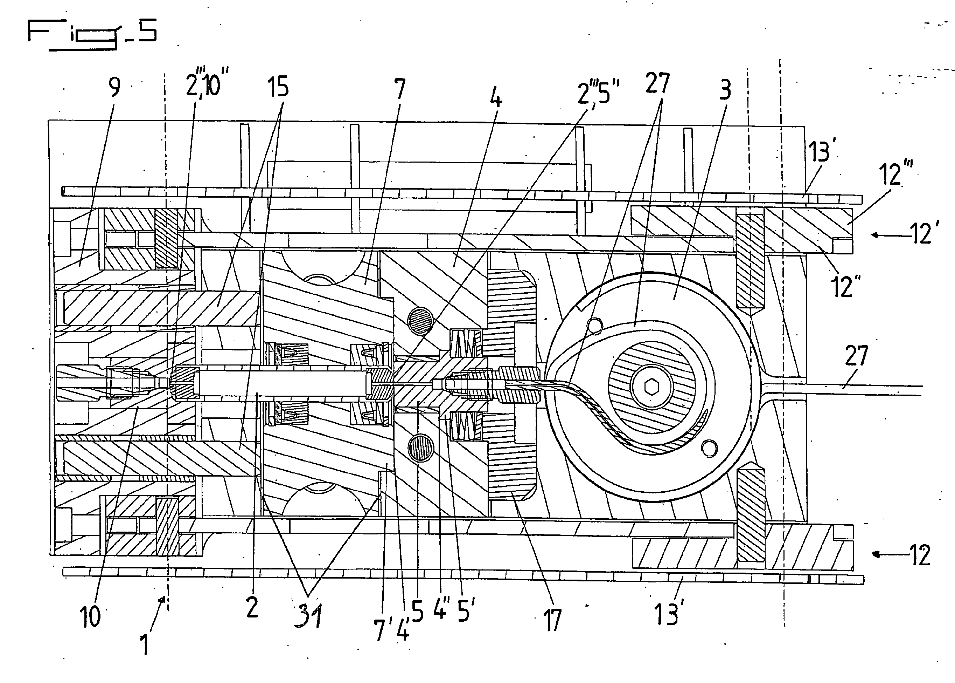

Selon une première caractéristique de l'invention, représentée notamment aux figures 3 à 5 des dessins annexés, le bloc support 7 comporte, au niveau de sa face destinée à être tournée vers la pièce de butée 4, au moins une partie saillante 7' sous forme de nervure profilée coopérant avec conjugaison de forme avec au moins un renfoncement sous forme de rainure profilée 4' ménagée dans la face en regard de la pièce de butée 4, autorisant une introduction par coulissement guidé dudit bloc 7 entre les pièces de maintien 6 et de butée 4, perpendiculairement au plan du corps 3 et à la direction X et un maintien latéral dudit bloc 7 à l'état monté.

Préférentiellement, la nervure 7' et la rainure 4' présenteront en section un contour rectangulaire ou en queue d'aronde.

En vue d'assurer un maintien précis de l'élément allongé 2 dans le bloc support 7 avec un serrage résilient, tout en autorisant un montage / démontage aisé par rapport à ce dernier, le passage de réception 8 du bloc support 7 est formé en partie, à chacune de ses extrémités, par une garniture d'étanchéité 8' réalisant un serrage élastique de l'élément allongé 2.

Pour faciliter la manipulation, et en particulier l'extraction, du bloc support 7, ce dernier peut présenter sur ses deux faces latérales extérieures, situées de part et d'autre de la direction axiale X, des creusements 7" formant des logements de préhension opposés pour des doigts, autorisant la saisie sûre dudit bloc 7 par pincement entre ces derniers.

Afin de conserver un positionnement précis de l'élément allongé 2 durant le serrage et de pouvoir assurer une application des forces de serrage dans l'axe dudit élément allongé 2, le second élément d'appui 10 de la pièce mobile 9 comporte un site de réception 10' en creux pour le logement de la portion d'extrémité 2" de l'élément allongé 2 dépassant de la pièce de maintien 6 lorsque le bloc support 7 est en position montée et le guidage axial de ladite pièce mobile 9 est réalisé par l'intermédiaire d'au moins deux tiges de guidage 15 montées dans lesdites pièces mobile 9 et de maintien 6, de manière fixe dans l'une d'entre elles et de manière coulissante dans l'autre.

Pour éviter un éventuel endommagement de l'élément allongé 2 et garantir un serrage d'intensité préréglée, le premier élément d'appui 5 est monté dans la pièce de butée 4 avec faculté de coulissement dans la direction axiale X sous l'effet de la poussée de l'élément allongé 2 lors de son serrage axial, ce à l'encontre d'une sollicitation élastique forçant ledit premier élément d'appui 5 contre une butée interne 4" de ladite pièce 4 dans le sens opposé le long de ladite direction axiale X.

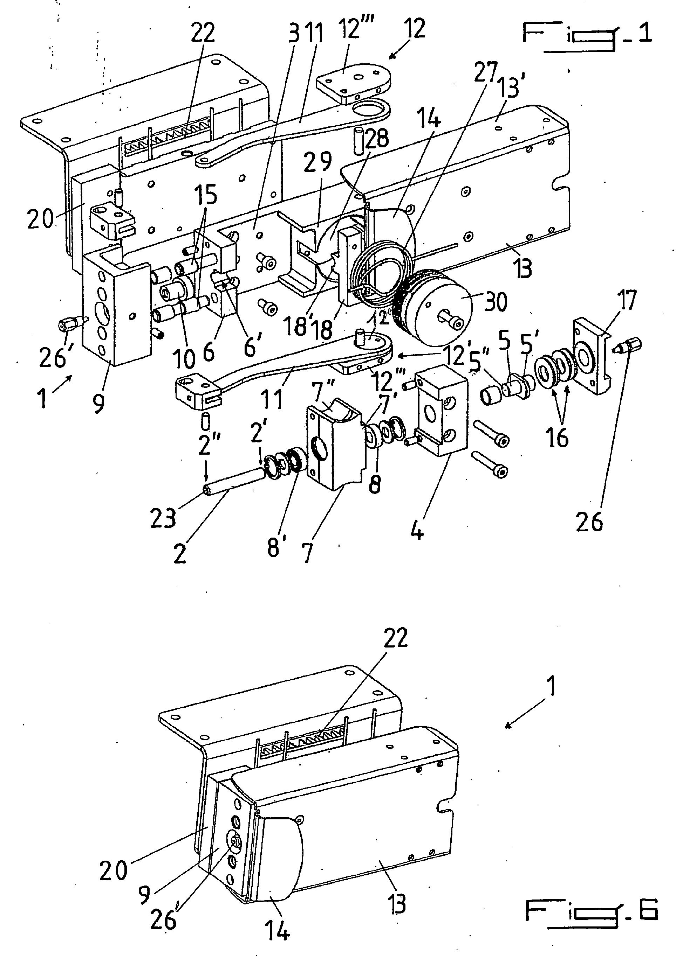

Conformément à un mode de réalisation préféré de l'invention, représenté notamment aux figures 1 et 3 à 5 des dessins annexés, la sollicitation élastique est fournie par une ou plusieurs paire(s) de rondelles ressorts 16, par exemple du type Belleville et assemblées tête-bêche deux par deux, montées sous contrainte entre un épaulement 5' du premier élément d'appui 5 et une pièce 17 formant contre-butée, solidaire de la pièce de butée 4 et/ou du corps 3 formant embase.

En outre, les pièces 4 et 6 pourront éventuellement comporter, au niveau de leurs surfaces destinées à entrer en contact avec les surfaces adjacentes de la pièce 7, des éléments résilients de faible hauteur 31, tels que des plots, qui sont totalement écrasés lors du rabattement du couvercle 13 en position de fermeture.

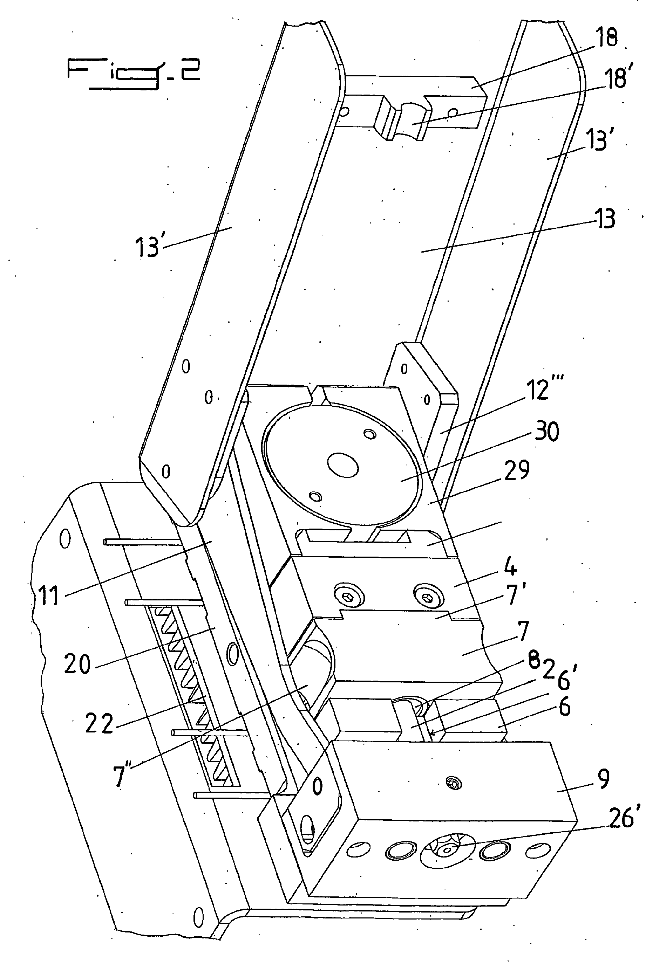

Selon une autre caractéristique de l'invention, permettant une tenue radiale de la partie de l'élément allongé 2 dépassant du bloc de support 7, ainsi qu'une définition précise et reproductible de la position rabattue du couvercle 13, la pièce de maintien 6 comporte une découpe 6' dans sa partie supérieure définissant une partie d'un passage de réception 19 pour une partie de l'élément allongé 2 et le couvercle 13 comporte sur sa face intérieure, tournée vers les pièces 4, 6, 9 et éléments 5, 7, 10 recouverts lors de son rabattement, une pièce 18 formant butoir, venant en appui sur la pièce de maintien 6 en position rabattue du couvercle 13, et pourvue d'une protubérance 18' présentant une forme complémentaire par rapport à la découpe 6' de la pièce de maintien 6 et formant la partie complémentaire du passage de réception 19 pour une partie de l'élément allongé 2 lorsque ledit couvercle 13 est en position rabattue (figures 2 et 3).

Conformément à une variante de réalisation préférée de l'invention, le couvercle 13 présente une structure profilée avec une section transversale en forme de U, dont les ailes latérales 13' portent les excentriques 12, 12' et recouvrent en position rabattue dudit couvercle 13 aussi bien la face supérieure, que les faces latérales des pièces 4, 6, 9 et des éléments 5, 7, 10, ainsi que les biellettes 11, 11', et éventuellement le corps 3 formant embase.

Ainsi, le dispositif 1 constituera, en position rabattue du couvercle 13, un boîtier sensiblement fermé, dont les composants fonctionnels sont inaccessibles et protégés de l'extérieur. La prévision d'éventuelles garnitures d'étanchéité permettra, le cas échéant, de renforcer l'isolation du volume interne ainsi délimité.

En vue de faciliter sa manoeuvre et de limiter l'effort à fournir lors de son rabattement forcé avec serrage de l'élément allongé 2, le couvercle 13 est muni, au niveau de son extrémité opposée aux excentriques 11, 11', d'un organe de préhension 14 sous forme de poignée, par exemple en tant que partie recourbée prolongeant ladite extrémité dudit couvercle 13.

De manière avantageuse, et comme le montrent les figures des dessins annexés, le corps formant embase 3, les pièces de maintien 6 et de butée 4, le bloc support 7 et la pièce mobile 9 présentent des structures massives en un métal inoxydable, tel que par exemple de l'acier inoxydable, et des formes sensiblement parallélépipédiques avec des faces en regard ou des surfaces en contact planes et des sections, dans des plans perpendiculaires à la direction axiale X, sensiblement identiques.

Ces dispositions permettent d'aboutir à un dispositif 1 compact, aisé à réaliser, résistant aux déformations et rigide.

La pièce de maintien 6 pourra par exemple être formée d'un seul tenant avec le corps 3 et la pièce de butée 4 être solidarisée par vissage ou boulonnage au corps 3.

Conformément à une variante de réalisation permettant de fournir un dispositif 1 régulé en température, il peut être prévu que le corps 3 formant embase soit rapporté, avec un contact surfacique intime, sur une plaque 20 formant socle et portant sur sa face opposée au moins un élément à effet Pelletier 21 associé à un radiateur 22.

Dans certaines applications, il peut être nécessaire de pouvoir faire transiter un fluide sous haute pression à travers l'élément allongé 2 pourvu, à chacune de ses extrémités 2', 2", au niveau de ses surfaces de contact 2" venant en application intime sur des surfaces de contact 5", 10" correspondantes des premier et second éléments d'appui 5, 10, d'un orifice débouchant 23 d'un passage de circulation 23' correspondant pour un fluide transitant à travers ledit élément allongé 2.

Il peut alors être prévu que lesdites surfaces de contact 5", 10" desdits premier et second éléments d'appui 5 et 10 soient également chacune pourvues d'un orifice débouchant 24, 24' de passages 25, 25' de circulation de fluide correspondants ménagés dans ces éléments, les deux orifices juxtaposés de chaque paire d'orifices 23 et 24 ; 23 et 24' en regard étant, après serrage de l'élément allongé 2, communiquant et alignés, les surfaces de contact respectives en application intime l'une contre l'autre 2''' et 5" ; 2''' et 10" formant une étanchéité autour desdits orifices contigus 23 et 24 ; 23 et 24', les passages 25, 25' ménagés dans lesdits éléments d'appui 5 et 10 étant reliés à des moyens de branchement ou de raccordement 26, 26' de conduits 27, montés sur lesdits éléments 5 et 10 à l'opposé de leurs orifices débouchants respectifs 24 et 24'.

La présente invention a également pour objet un porte-cartouche pour appareil de chromatographie haute pression, destiné au support de cartouches interchangeables, généralement remplies de gel et traversées par le flux de liquide à analyser, caractérisé en ce qu'il consiste en un dispositif 1 tel que décrit ci-dessus, l'élément allongé 2 étant formé par une cartouche cylindrique du type précité.

Conformément à une caractéristique avantageuse supplémentaire de l'invention, représentée aux figures des dessins annexés, le corps support formant embase 3 comporte un emplacement 28, préférentiellement entouré d'une paroi latérale 29 circonférentielle et constituant, avec le couvercle pivotant 13 en portion rabattue un volume sensiblement fermé pour la réception d'un tambour 30 destiné à supporter une pluralité de spires d'un conduit 27 d'alimentation en liquide, relié au moyen d'un raccordement 26 du premier élément d'appui 5, ledit tambour 30 présentant une structure cylindrique massive en un matériau conducteur thermique et étant fixé, par sa base, avec un contact surfacique intime, sur ledit corps formant embase 3.

Cette bobine de conduit 27 constitue ainsi une réservoir de fluide thermorégulé permettant d'assurer une circulation de fluide à température pratiquement constante à travers l'élément allongé 2.

L'emplacement 28 pourra éventuellement être creusé dans le bloc de matériau formant le corps 3.

## Revendications

1. Dispositif pour le montage avec serrage axial et alignement précis d'un élément allongé, notamment d'un élément tubulaire amovible à intégrer de manière étanche dans un circuit de circulation traversant ledit dispositif, **caractérisé en ce qu'**il est principalement constitué, d'une part, par un corps (3) rigide définissant une direction axiale (X) et formant une embase sur laquelle sont formées ou fixées une pièce de butée (4) comprenant un premier élément d'appui (5) pour l'une (2') des extrémités de l'élément allongé (2) et une pièce (6) de maintien au moins partiel pour ledit élément allongé (2), ces pièces (4 et 6) étant axialement séparées, d'autre part, par un bloc support (7) amovible comportant un passage traversant (8) pour la réception ajustée, mais coulissante, d'une partie au moins de l'élément allongé (2) et pouvant être positionné avec calage entre la pièce de maintien (6) et la pièce de butée (4) en venant en appui surfacique contre cette dernière au moins et, enfin, par une pièce mobile (9), guidée dans la direction (X) et comprenant un second élément d'appui (10) pour l'autre extrémité (2") de l'élément allongé (2), ladite pièce mobile (9) étant reliée à ou solidaire de moyens (11, 11' ; 12, 12') transformant le mouvement de pivotement d'un organe de manipulation (13, 14) en mouvement de translation dans ladite direction (X) de ladite pièce mobile (9).

2. Dispositif selon la revendication 1, **caractérisé en ce que** la pièce mobile (9) est solidaire, de manière articulée, de deux biellettes (11, 11') montées, à leurs extrémités opposées à ladite pièce mobile (9), avec faculté de rotation, sur des excentriques respectifs (12, 12') rapportés avec faculté de rotation sur le corps (3) formant embase et assemblés rigidement avec une pièce (13) formant levier pivotant pourvu d'un organe ou d'une zone (14) de préhension, les deux ensembles excentriques (12, 12') / biellettes (11, 11') transformant le mouvement de pivotement du levier (13) en mouvement de translation de la pièce mobile (9).

3. Dispositif selon la revendication 1 ou la revendication 2, **caractérisé en ce que** ce que l'organe de manipulation unique consiste en un capot ou couvercle (13) formant levier pivotant et muni d'un organe ou d'une zone extrémale de préhension (14) en vue du déplacement dudit levier, ledit couvercle ou capot (13) recouvrant substantiellement l'ensemble des pièces (4, 6, 9) et des éléments (5, 7, 10) dans sa position rabattue, correspondant à l'état serré de l'élément allongé (2).

4. Dispositif selon l'une quelconque des revendications 1 à 3, **caractérisé en ce que** le bloc support (7) comporte, au niveau de sa face destinée à être tournée vers la pièce de butée (4), au moins une partie saillante (7') sous forme de nervure profilée coopérant avec conjugaison de forme avec au moins un renfoncement sous forme de rainure profilée (4') ménagée dans la face en regard de la pièce de butée (4), autorisant une introduction par coulissement guidé dudit bloc (7) entre les pièces de maintien (6) et de butée (4), perpendiculairement au plan du corps (3) et à la direction (X) et un maintien latéral dudit bloc (7) à l'état monté.

5. Dispositif selon l'une quelconque des revendications 1 à 4, **caractérisé en ce que** le passage de réception (8) du bloc support (7) est formé en partie, à chacune de ses extrémités, par une garniture d'étanchéité (8') réalisant un serrage élastique de l'élément allongé (2) et **en ce que** ledit bloc support (7) présente sur ses deux faces latérales extérieures, situées de part et d'autre de la direction axiale (X), des creusements (7") formant des logements de préhension opposés pour des doigts.

6. Dispositif selon l'une quelconque des revendications 1 à 5, **caractérisé en ce que** le second élément d'appui (10) de la pièce mobile (9) comporte un site de réception (10') en creux pour le logement de la portion d'extrémité (2") de l'élément allongé (2) dépassant de la pièce de maintien (6) lorsque le bloc support (7) est en position montée et **en ce que** le guidage axial de ladite pièce mobile (9) est réalisé par l'intermédiaire d'au moins deux tiges de guidage (15) montées dans lesdites pièces mobile (9) et de maintien (6), de manière fixe dans l'une et de manière coulissante dans l'autre.

7. Dispositif selon l'une quelconque des revendications 1 à 6, **caractérisé en ce que** le premier élément d'appui (5) est monté dans la pièce de butée (4) avec faculté de coulissement dans la direction axiale (X) sous l'effet de la poussée de l'élément allongé (2) lors de son serrage axial, ce à l'encontre d'une sollicitation élastique forçant ledit premier élément d'appui (5) contre une butée interne (4") de ladite pièce (4) dans le sens opposé la long de ladite direction axiale (X).

8. Dispositif selon la revendication 7, **caractérisé en ce que** la sollicitation élastique est fournie par une ou plusieurs paire(s) de rondelles ressorts (16), par exemple du type Belleville et assemblées tête-bêche deux par deux, montées sous contrainte entre un épaulement (5') du premier élément d'appui (5) et une pièce (17) formant contre-butée, solidaire de la pièce de butée (4) et/ou du corps (3) formant embase.

9. Dispositif selon l'une quelconque des revendications 1 à 8, **caractérisé en ce que** la pièce de maintien (6) comporte une découpe (6') dans sa partie supérieure définissant une partie d'un passage de réception (19) pour une partie de l'élément allongé (2) et **en ce que** le couvercle (13) comporte sur sa face intérieure, tournée vers les pièces (4, 6, 9) et éléments (5, 7, 10) recouverts lors de son rabattement, une pièce (18) formant butoir, venant en appui sur la pièce de maintien (6) en position rabattue en direction de l'embase (3) de l'organe (13, 19), et pourvue d'une protubérance (18') présentant une forme complémentaire par rapport à la découpe (6') de la pièce de maintien (6) et formant la partie complémentaire du passage de réception (19) pour une partie de l'élément allongé (2) lorsque ledit organe (13) est en position rabattue.

10. Dispositif selon l'une quelconque des revendications 3 à 9, **caractérisé en ce que** le couvercle (13) présente une structure profilée avec une section transversale en forme de U, dont les ailes latérales (13') portent les excentriques (12, 12') et recouvrent en position rabattue dudit couvercle (13) aussi bien la face supérieure, que les faces latérales des pièces (4, 6, 9) et des éléments (5, 7, 10), ainsi que les biellettes (11, 11') , et éventuellement le corps (3) formant embase, et **en ce que** ledit couvercle (13) est muni, au niveau de son extrémité opposée aux excentriques (11, 11'), d'un organe de préhension (14) sous forme de poignée, par exemple en tant que partie recourbée prolongeant ladite extrémité dudit couvercle (13).

11. Dispositif selon l'une quelconque des revendications 1 à 10, **caractérisé en ce que** le corps (3) formant embase est rapporté, avec un contact surfacique intime, sur une plaque (20) formant socle portant sur sa face opposée au moins un élément à effet Pelletier (21) associé à un radiateur (22).

12. Dispositif selon l'une quelconque des revendications 1 à 10, **caractérisé en ce que** l'élément allongé (2) est pourvu, à chacune de ses extrémités (2', 2"), au niveau de ses surfaces de contact (2") venant en application intime sur des surfaces de contact (5", 10") correspondantes des premier et second éléments d'appui (5, 10), d'un orifice débouchant (23) d'un passage de circulation (23') correspondant pour un fluide et **en ce que** lesdites surfaces de contact (5", 10") desdits premier et second éléments d'appui (5 et 10) sont également chacune pourvues d'un orifice débouchant (24, 24') de passages (25, 25') de circulation de fluide correspondants ménagés dans ces éléments, les deux orifices juxtaposés de chaque paire d'orifices (23 et 24 ; 23 et 24') en regard étant, après serrage de l'élément allongé (2), communiquant et alignés, les surfaces de contact respectives en application intime l'une contre l'autre (2"' et 5" ; 2''' et 10") formant une étanchéité autour desdits orifices contigus (23 et 24 ; 23 et 24'), les passages (25, 25') ménagés dans lesdits éléments d'appui (5 et 10) étant reliés à des moyens de branchement ou de raccordement (26, 26') de conduits (27), montés sur lesdits éléments (5 et 10) à l'opposé de leurs orifices débouchants respectifs (24 et 24').

13. Dispositif selon l'une quelconque des revendications 1 à 12, **caractérisé en ce que** le corps formant embase (3), les pièces de maintien (6) et de butée (4), le bloc support (7) et la pièce mobile (9) présentent des structures massives en un métal inoxydable, tel que par exemple de l'acier, inoxydable, et des formes sensiblement parallélépipédiques avec des faces en regard ou des surfaces en contact planes et des sections, dans des plans perpendiculaires à la direction axiale (X), sensiblement identiques.

14. Porte-cartouche pour appareil de chromatographie haute pression, destiné au support de cartouches interchangeables, généralement remplies de gel et traversées par le flux de liquide à analyser, **caractérisé en ce qu'**il consiste en un dispositif (1) selon l'une quelconque des revendications 1 à 13, l'élément allongé (2) étant formé par une cartouche cylindrique du type précité.

15. Porte-cartouche selon la revendication 14, **caractérisé en ce que** le corps support formant embase (3) comporte un emplacement (28), préférentiellement entouré d'une paroi latérale (29) circonférentielle et constituant, avec le couvercle pivotant (13) en portion rabattue un volume sensiblement fermé pour la réception d'un tambour (30) destiné à supporter une pluralité de spires d'un conduit (27) d'alimentation en liquide, relié au moyen d'un raccordement (26) du premier élément d'appui (5), ledit tambour (30) présentant une structure cylindrique massive en un matériau conducteur thermique et étant fixé, par sa base, avec un contact surfacique intime, sur ledit corps formant embase (3).

## Claims

1. Device for mounting an elongated element with axial clamping and precise alignment, in particular a detachable tubular element to be integrated in a sealing manner into a circulation circuit traversing said device, **characterised in that** it consists principally, on the one hand, of a rigid body (3) defining an axial direction (X) and forming a base onto which are formed or fixed a stop part (4) comprising a first support element (5) for one (2') of the ends of the elongated element (2) and an at least partial retaining part (6) for said elongated element (2), said parts (4 and 6) being axially separated, on the other hand, a detachable support block (7) comprising a traversing passage (8) for receiving in a fitted but sliding manner at least one part of the elongated element (2) and able to be positioned with adjustment between the retaining part (6) and the stop part (4) by bearing with its surface against the latter at least and, lastly, a mobile part (9), which is guided in direction (X) and comprises a second support element (10) for the other end (2") of the elongated element (2), said mobile part (9) being attached or connected to means (11, 11'; 12, 12') for transforming the pivoting movement of a manipulating element (13, 14) into a translatory movement in said direction (X) of the said mobile part (9).

2. Device according to claim 1, **characterised in that** the mobile part (9) is connected in an articulated manner to two rocker bars (11, 11') mounted, at their ends opposite the said mobile part (9), with the ability to rotate, on the respective eccentrics (12, 12') connected rotationally onto the body (3) forming a base and assembled in a rigid manner with a part (13) which forms a pivoting lever provided with a prehensioning element or zone (14), the two eccentric assemblies (12, 12')/ rocker bars (11, 11') transforming the pivoting movement of the lever (13) into a translatory movement of the mobile part (9).

3. Device according to claim 1 or claim 2, **characterised in that** the single manipulation element consists of a hood or cover (13) forming a pivoting lever and provided with a prehensioning element or zone (14) with a view to displace the said lever, said cover or hood (13) covering substantially the assembly of parts (4, 6, 9) and elements (5, 7, 10) in their turned down position corresponding to the clamped state of the elongated element (2).

4. Device according to any one of claims 1 to 3, **characterised in that** the support block (7) comprises, on its face designed to be turned towards the stop part (4), at least one projecting part (7') in the form of a profiled rib, which cooperates with the form of at least one indent in the form of a profiled groove (4'), which is arranged in the opposite surface of the stop part (4) which allows the introduction by guided sliding of the said block (7) between the retaining part (6) and stop part (4), perpendicular to the plane of the body (3) and direction (X) and a lateral support of said block (7) in the mounted state.

5. Device according to any one of claims 1 to 4, **characterised in that** the receiving passage (8) of the support block (7) is formed in part, at each of its ends, by a sealing fitting (8') which performs the elastic clamping of the elongated element (2), and **in that** the said support block (7) comprises, on its two exterior lateral faces on either side of the axial direction (X), hollows (7") forming opposite prehensioning housings for the fingers.

6. Device according to any one of claims 1 to 5, **characterised in that** the second bearing element (10) of the mobile part (9) comprises a hollow reception side (10') for housing the end portion (2") of the elongated element (2) overlapping the retaining part (6) when the support block (7) is in a mounted position, and **in that** the axial guiding of said mobile part (9) is performed by means of at least two guiding rods (15) mounted in said mobile part (9) and retaining part (6) in a fixed manner in one and in a sliding manner in the other.

7. Device according to any one of claims 1 to 6, **characterised in that** the first bearing element (5) is mounted in the stop part (4) with the ability to slide in axial direction (X) under the effect of the force from the elongated element (2) during its axial clamping, opposite an elastic loading which forces the said first bearing element (5) against an internal stop (4") of said part (4) in the direction opposite the length of said axial direction (X).

8. Device according to claim 7, **characterised in that** the elastic loading is provided by one or more pairs of disc springs (16), for example of the Belleville type, and assembled head-to-tail two by two, mounted under constraint between a shoulder (5') of the first bearing element (5) and a part (17) forming a counter-stop which is joined to the stop part (4) and/or the body (3) forming the base.

9. Device according to any one of claims 1 to 8, **characterised in that** the retaining part (6) comprises a cutout (6') in its upper part defining part of a receiving passage (19) for a part of the elongated element (2), and **in that** the cover (13) comprises on its inner face, facing the parts (4, 6, 9) and elements (5, 7, 10) which are covered when it is folded down, a part (18) forming a buffer, which bears on the retaining part (6) in a folded down position in the direction of the base (3) of the element (13, 19), and provided with a protuberance (18') which has a complementary shape in relation to the cutout (6') of the retaining part (6) and forming the complementary part of the receiving passage (19) for part of the elongated element (2) when said element (13) is in a folded down position.

10. Device according to any one of claims 3 to 9, **characterised in that** the cover (13) has a profiled structure with a transverse section in the shape of a U, the lateral wings (13') of which bear the eccentrics (12, 12') and also cover in a folded down position of said cover (13) the upper surface, **in that** the lateral surfaces of the parts (4, 6, 9) and elements (5, 7, 10), as well as the rocker bars (11, 11'), and possibly the body (3) form the base, and **in that** the said cover (13) is provided at its end opposite the eccentrics (11, 11') with a prehensioning element (14) in the form of a handle, for example **in that** the curved part extends the end of said cover (13).

11. Device according to any one of claims 1 to 10, **characterised in that** the body (3) forming the base is connected with intimate surface contact to a plate (20) forming a pedestal bearing on its opposite surface at least one element with a Pelletier effect (21) connected to a radiator (22).

12. Device according to any one of claims 1 to 10, **characterised in that** the elongated element (2) is provided at each end (2', 2") at its contact surfaces (2") in close application on the corresponding contact surfaces (5", 10") of the first and second support elements (5, 10) of an opening (23) with a corresponding circulation passage (23') for a liquid, and **in that** the said contact surfaces (5", 10") of said first and second bearing elements (5 and 10) are each provided with an opening (24, 24') for passages (25, 25') for the corresponding circulation of liquid in said elements, the two juxtaposed openings of each pair of opposite openings (23 and 24; 23 and 24') being, after clamping the elongated element (2), in communication and aligned, the respective contact surfaces in close contact with one another (2''' and 5"; 2''' and 10") forming a seal around said contiguous openings (23 and 24; 23 and 24'), the passages (25, 25') arranged in the said bearing elements (5 and 10) being connected to branching or connecting means (26, 26') for pipes (27), mounted on said elements (5 and 10) opposite their respective openings (24 and 24').

13. Device according to any one of claims 1 to 12, **characterised in that** the body forming a base (3), the retaining part (6) and stop part (4), the support block (7) and the mobile part (9) are solid structures made from an non-oxidising metal, such as for example stainless steel, and are shaped to be virtually parallelepiped with opposite surfaces or plane contact surfaces and virtually identical sections, in planes perpendicular to the axial direction (X).

14. Cartridge carrier for a high pressure chromatography device designed to support interchangeable cartridges, generally filled with gel and traversed by the flow of liquid to be analysed, **characterised in that** it consists of a device (1) according to any one of claims 1 to 13, the elongated element (2) being formed by a cylindrical cartridge of the aforementioned type.

15. Cartridge carrier according to claim 14, **characterised in that** the support body forming the base (3) comprises a slot (28), preferably surrounded by a circumferential lateral wall (29) and constituting with the pivoting cover (13) in the folded down portion a largely closed volume for mounting a drum (30) designed to support a plurality of coils of a feed pipe (27) for liquid connected to a connecting means (26) of a first bearing element (5), said drum (30) having a solid cylindrical structure made of a heat-conducting material and being fixed at its base with close surface contact on the said body forming the base (3).

## Patentansprüche

1. Vorrichtung zur Montage eines länglichen Elements mit axialer Einspannung und genauer Ausrichtung, insbesondere eines abnehmbaren röhrenförmigen Elements, das in dichter Weise in einen die besagte Vorrichtung durchquerenden Umwälzkreislauf integriert werden soll, **dadurch gekennzeichnet, dass** sie hauptsächlich gebildet wird von einerseits einem starren Körper (3), der eine axiale Richtung (X) definiert und eine Unterlage bildet, auf der ein Anschlagteil (4), umfassend ein erstes Abstützelement (5) für das eine (2') der Enden des länglichen Elements (2), sowie ein Teil (6) zum mindestens teilweisen Halten des länglichen Elements (2) ausgebildet oder befestigt sind, wobei diese Teile (4 und 6) axial voneinander getrennt sind, andererseits von einem abnehmbaren Stützblock (7), der einen durchgehenden Kanal (8) zur passenden aber verschiebbaren Aufnahme von mindestens einem Teil des länglichen Elements (2) aufweist und mit Verkeilung zwischen dem Halteteil (6) und dem Anschlagteil (4) positioniert werden kann, wobei er sich zumindest gegen dieses letztere oberflächlich abstützt, und schließlich von einem beweglichen Teil (9), das in der Richtung (X) geführt ist und ein zweites Abstützelement (10) für das andere Ende (2") des länglichen Elements (2) umfasst, wobei das besagte bewegliche Teil (9) mit Mitteln (11, 11'; 12, 12') verbunden oder fest verbunden ist, welche die Schwenkbewegung eines Betätigungsorgans (13, 14) in eine Translationsbewegung des besagten beweglichen Teils (9) in der besagten Richtung (X) umwandeln.

2. Vorrichtung nach Anspruch 1, **dadurch gekennzeichnet, dass** das bewegliche Teil (9) in gelenkiger Weise fest mit zwei Schwingarmen (11, 11') verbunden ist, die an ihren zu dem besagten beweglichen Teil (9) entgegengesetzten Enden mit Drehvermögen auf jeweiligen Exzentern (12, 12') montiert sind, die mit Drehvermögen auf dem die Unterlage bildenden Körper (3) angebracht und starr mit einem Teil (13) zusammenfügt sind, das einen mit einem Greiforgan oder einer Greifzone (14) versehenen Schwenkhebel bildet, wobei die beiden Exzenter(12, 12')/ Schwingarm(11, 11')-Einheiten die Schwenkbewegung des Hebels (13) in eine Translationsbewegung des beweglichen Teils (9) umwandeln.

3. Vorrichtung nach Anspruch 1 oder Anspruch 2, **dadurch gekennzeichnet, dass** das einzige Betätigungsorgan aus einer den Schwenkhebel bildenden und im Hinblick auf die Verlagerung des besagten Hebels mit einem Greiforgan oder einer Greifzone (14) am Ende versehenen Haube oder Abdeckhaube (13) besteht, wobei die besagte Haube oder Abdeckhaube (13) in ihrer abgeklappten Position, entsprechend dem eingespannten Zustand des länglichen Elements (2), im Wesentlichen die Gesamtheit der Teile (4, 6, 9) und der Elemente (5, 7, 10) bedeckt.

4. Vorrichtung nach einem der Ansprüche 1 bis 3, **dadurch gekennzeichnet, dass** der Stützblock (7) auf Höhe seiner Seite, die dazu bestimmt ist, zum Anschlagteil (4) hin gedreht zu werden, mindestens einen vorspringenden Teil (7') in Form einer profilierten Rippe aufweist, die formschlüssig mit mindestens einer Vertiefung in Form einer in der gegenüberliegenden Seite des Anschlagteils (4) angebrachten profilierten Nut (4') zusammenwirkt, wobei sie ein Einführen des besagten Blocks (7) durch geführte Verschiebung zwischen das Halteteil (6) und das Anschlagteil (4) senkrecht zur Ebene des Körpers (3) und zu der Richtung (X) sowie ein seitliches Festhalten des besagten Blocks (7) im montierten Zustand erlauben.

5. Vorrichtung nach einem der Ansprüche 1 bis 4, **dadurch gekennzeichnet, dass** der Aufnahmekanal (8) des Stützblocks (7) teilweise, an jedem seiner Enden, von einer Dichtung (8') gebildet wird, die für eine elastische Einspannung des länglichen Elements (2) sorgt, und dass der besagte Stützblock (7) auf seinen zwei Außenseiten, die sich beiderseits der axialen Richtung (X) befinden, Ausnehmungen (7'') aufweist, die entgegengesetzte Greifaufnahmen für Finger bilden.

6. Vorrichtung nach einem der Ansprüche 1 bis 5, **dadurch gekennzeichnet, dass** das zweite Abstützelement (10) des beweglichen Teils (9) eine vertiefte Aufnahmestelle (10') für die Unterbringung des Endteils (2") des länglichen Elements (2) aufweist, der über das Halteteil (6) übersteht, wenn sich der Stützblock (7) in Montageposition befindet, und dass die axiale Führung des besagten beweglichen Teils (9) mit Hilfe von mindestens zwei Führungsstangen (15) verwirklicht ist, die in dem besagten beweglichen Teil (9) und dem besagten Halteteil (6) montiert sind, und zwar in fester Weise in dem einen und in verschiebbarer Weise in dem anderen.

7. Vorrichtung nach einem der Ansprüche 1 bis 6, **dadurch gekennzeichnet, dass** das erste Abstützelement (5) mit Gleitvermögen in der axialen Richtung (X) unter der Einwirkung des Drucks des länglichen Elements (2) bei seiner axialen Einspannung in dem Anschlagteil (4) montiert ist, und dies gegen eine elastische Vorspannung, die das besagte erste Abstützelement (5) in der entgegengesetzten Richtung entlang der besagten axialen Richtung (X) gegen einen inneren Anschlag (4") des besagten Teils (4) drückt.

8. Vorrichtung nach Anspruch 7, **dadurch gekennzeichnet, dass** die elastische Vorspannung von einem Paar oder mehreren Paaren von Federringen (16) geliefert wird, zum Beispiel vom Typ Belleville und im Zweierpack abwechselnd verkehrt herum montiert, die unter Spannung zwischen einer Schulter (5') des ersten Abstützelements (5) und einem ein Widerlager bildenden Teil (17) montiert sind, das fest mit dem Anschlagteil (4) und/oder dem die Unterlage bildenden Körper (3) verbunden ist.

9. Vorrichtung nach einem der Ansprüche 1 bis 8, **dadurch gekennzeichnet, dass** das Halteteil (6) in seinem oberen Teil einen Ausschnitt (6') aufweist, der einen Teil eines Aufnahmekanals (19) für einen Teil des länglichen Elements (2) definiert, und dass die Abdeckhaube (13) auf ihrer den Teilen (4, 6, 9) und Elementen (5, 7, 10), die nach ihrem Abklappen bedeckt sind, zugewandten Innenseite ein Teil (18) aufweist, das einen Puffer bildet, wobei es sich in der abgeklappten Position in Richtung der Unterlage (3) des Organs (13, 19) auf dem Halteteil (6) abstützt und mit einem Vorsprung (18') versehen ist, der eine in Bezug zum Ausschnitt (6') des Halteteils (6) komplementäre Form besitzt und den komplementären Teil des Aufnahmekanals (19) für einen Teil des länglichen Elements (2) bildet, wenn sich das besagte Organ (13) in der abgeklappten Position befindet.

10. Vorrichtung nach einem der Ansprüche 3 bis 9, **dadurch gekennzeichnet, dass** die Abdeckhaube (13) eine profilierte Struktur mit einem Querschnitt in U-Form aufweist, deren Seitenwangen (13') die Exzenter (12, 12') tragen und in der abgeklappten Position der besagten Abdeckhaube (13) sowohl die Oberseite wie die Seitenflächen der Teile (4, 6, 9) und der Elemente (5, 7, 10) bedecken, ebenso wie die Schwingarme (11, 11') und gegebenenfalls den die Unterlage bildenden Körper (3), und dass die besagte Abdeckhaube (13) in Höhe ihres zu den Exzentern (11, 11') entgegengesetzten Endes mit einem Greiforgan (14) in Griffform versehen ist, zum Beispiel als gekrümmter, das besagte Ende der besagten Abdeckhaube (13) verlängernder Teil.

11. Vorrichtung nach einem der Ansprüche 1 bis 10, **dadurch gekennzeichnet, dass** der die Unterlage bildende Körper (3) mit innigem Oberflächenkontakt auf einer einen Sockel bildenden Platte (20) angebracht ist, die auf ihrer entgegengesetzten Seite mindestens ein mit einem Kühler (22) verbundenes Peltier-Element (21) trägt.

12. Vorrichtung nach einem der Ansprüche 1 bis 10, **dadurch gekennzeichnet, dass** das längliche Element (2) an jedem seiner Enden (2', 2") in Höhe seiner Kontaktoberflächen (2"), die mit entsprechenden Kontaktoberflächen (5", 10") des ersten und des zweiten Abstützelements (5, 10) in innige Anlage kommen, mit einer Mündungsöffnung (23) eines entsprechenden Umwälzkanals (23') für ein Fluid versehen ist, und dass die besagten Kontaktoberflächen (5", 10") des besagten ersten und zweiten Abstützelements (5 und 10) gleichfalls jede mit einer Mündungsöffnung (24, 24') von entsprechenden, in diesen Elementen vorgesehenen Fluidumwälzkanälen (25, 25') versehen sind, wobei die beiden miteinander verbundenen Öffnungen von jedem Paar von gegenüberliegenden Öffnungen (23 und 24; 23 und 24') nach dem Einspannen des länglichen Elements (2) kommunizieren und ausgerichtet sind, wobei die jeweiligen, in inniger Anlage gegeneinander (2''' und 5"; 2''' und 10") befindlichen Kontaktoberflächen eine Abdichtung um die besagten aneinandergrenzenden Öffnungen (23 und 24; 23 und 24') herum bilden, wobei die in den besagten Abstützelementen (5 und 10) vorgesehenen Kanäle (25, 25') mit Verzweigungs- oder Verbindungsmitteln (26, 26') von Leitungen (27) verbunden sind, die auf den besagten Elementen (5 und 10) entgegengesetzt zu ihren jeweiligen Mündungsöffnungen (24 und 24') montiert sind.

13. Vorrichtung nach einem der Ansprüche 1 bis 12, **dadurch gekennzeichnet, dass** der die Unterlage bildende Körper (3), das Halteteil (6) und das Anschlagteil (4), der Stützblock (7) und das bewegliche Teil (9) jeweils eine massive Bauweise aus einem nichtrostenden Metall, wie zum Beispiel nichtrostendem Stahl, und etwa quaderförmige Formen mit ebenen gegenüberliegenden Seiten oder im Kontakt befindlichen Oberflächen sowie etwa gleichen Querschnitten in zur axialen Richtung (X) senkrechten Ebenen besitzen.

14. Kartuschenträger für ein Hochdruck-Chromatographiegerät, das zur Abstützung von austauschbaren, allgemein mit Gel gefüllten und von dem Strom von zu analysierender Flüssigkeit durchquerten Kartuschen bestimmt ist, **dadurch gekennzeichnet, dass** er aus einer Vorrichtung (1) nach einem der Ansprüche 1 bis 13 besteht, wobei das längliche Element (2) von einer zylindrischen Kartusche der zuvor genannten Art gebildet wird.

15. Kartuschenträger nach Anspruch 14, **dadurch gekennzeichnet, dass** der die Unterlage bildende Stützkörper (3) eine Stelle (28) aufweist, die vorzugsweise von einer seitlichen Umfangswand (29) umgeben ist und mit der Schwenkabdeckhaube (13) im abgeklappten Teil ein im Wesentlichen geschlossenes Volumen zur Aufnahme einer Trommel (30) bildet, die dazu bestimmt ist, eine Mehrzahl von Windungen einer mittels eines Anschlusses (26) des ersten Abstützelements (5) angeschlossenen Flüssigkeitsspeiseleitung (27) zu tragen, wobei die besagte Trommel (13) eine massive zylindrische Bauweise aus einem wärmeleitenden Material besitzt und mittels ihres Fußes mit einem innigen Oberflächenkontakt auf dem besagten die Unterlage bildenden Körper (3) befestigt ist.
